# EUROPEAN PATENT APPLICATION

(11) **EP 4 576 681 A1**
(43) Date of publication of application: **25.06.2025**
(21) Application number: 24204855.1
(22) Date of filing: 04.10.2024
(51) Int. Cl.: H04L 12/40, H04L 12/413

(54) **HYBRID WIRED COMMUNICATION SYSTEM COMBINING CONTROLLER AREA NETWORK (CAN) AND OTHER HIGH SPEED COMMUNICATION TECHNOLOGIES**

(30) Priority: 06.10.2023 TW 112138625; 19.10.2023 TW 112140069
(71) Applicant: Hangzhou Lianxintong Semiconductor Co., Ltd., Hangzhou City Zhejiang (CN)
(72) Inventor: CHOU, Ting-You, 302 Zhubei City (TW); LI, Hsin-Hsien, 302 Zhubei City (TW); LIN, Junn-Yi, 302 Zhubei City (TW)
(74) Representative: Lang, Christian

(57) **Abstract**

A wired communication system includes at least two high-speed communication units compatible with a CAN protocol, the high-speed communication units include: a first CAN transceiver for modulating and transmitting, or receiving and demodulating CAN protocol signals. The first CAN transceiver does not transmit dominant signals in order not to interfere with high-speed signals when the wired communication system is transmitting the high-speed signals; and can transmit signals only after a predetermined time period has elapsed since dominant signaling ceased. The communication system has a default mechanism that allows all the high-speed communication units connected to the same communication medium to know start and end times of transmissions of the high-speed signals for reception and demodulation. All the communication units return to original CAN modes for the arbitration of the next signal transmission.

## Description

### FIELD OF THE INVENTION

This disclosure relates to a communication system, and more particularly to a hybrid wired communication system combining a controller area network (hereinafter referred to as CAN) and other high speed communication technologies.

### DESCRIPTION OF RELATED ART

CAN is one of the most widely used communication system, but the bandwidth that CAN BUS can support is very limited. The insufficient bandwidth results in the condition of the lack of effective interconnection or interoperability between subsystems (or nodes) in the communication system. Although the maximum data rate of controller area network flexible data-rate (hereinafter referred to as CAN FD) protocol can be up to 8 Mbps, it is still a primary limitation for the development of communication system in electric vehicles. Once a higher bandwidth is required, the reliability of communication will be an issue.

In the CAN protocol, it is important for the communication system to determine the number of subsystems (e.g., sensors, controllers or other apparatuses) that are able to be connected to each interface. Moreover, to accommodate more subsystems, more CAN BUS interfaces need to be added to the gateway, but this also increases the risk of data re-transmission due to higher bandwidth usage. Consequently, when the bandwidth is insufficient and the bandwidth easily becomes fully utilized, the flexibility of expanding subsystems within the communication system will be limited. Furthermore, to manage the bandwidth of each interface on the gateway effectively, the wiring in the car becomes more complex, requiring more connection cables and apparatuses, which makes the overall system more intricate and difficult to manage.

### SUMMARY OF THE INVENTION

This disclosure provides a wired communication system that integrates CAN with other high-speed communication systems, such as an orthogonal frequency-division multiplexing (OFDM), a quadrature amplitude modulation (QAM) or a serializer/deserializer (SerDes), as a solution to the aforementioned issues. This solution utilizes two-wire systems like twisted pairs, power lines, or coaxial lines as transmission media, enabling simultaneous transmission and reception of messages for both CAN (or CAN FD) and other high-speed communication technologies. This approach retains the advantages of the CAN BUS for the in-vehicle communication while increasing the transmission rate. Taking the Homeplug AV2 as an example, its transmission rate can reach approximately 1 Gbps. Designing a suitable OFDM system with similar bandwidth and integrating it with the CAN/CAN FD for the in-vehicle communication could significantly simplify the in-vehicle communication architecture and reduce the usage of the in-vehicle wiring harness, thereby lowering costs and improving reliability.

### BRIEF DESCRIPTION OF DRAWINGS

FIG. 1 shows a combination of a high-speed communication unit and a general CAN communication unit on a same CAN BUS.
FIG. 2 is a schematic diagram showing a high-speed signal isolator added to an old CAN communication unit when an originally designed CAN transceiver cannot be replaced by another specialized CAN transceiver.
FIG. 3 is a schematic diagram showing a high-speed signal isolator added to an old CAN communication unit when the originally designed CAN transceiver can be replaced by another specialized CAN transceiver.
FIG. 4 shows a standard CAN format and intervals used by a high-speed communication signal.
FIG. 5 shows an extended CAN format and intervals used by the high-speed communication signal.
FIG. 6 shows a combination of a high-speed communication unit and a general CAN communication unit on a same CAN BUS (without a high-speed signal isolator).
FIG. 7 is a schematic diagram showing a CAN signal in FIG. 6.
FIG. 8 shows another embodiment of this disclosure.

### DETAILED DESCRIPTION OF THE INVENTION

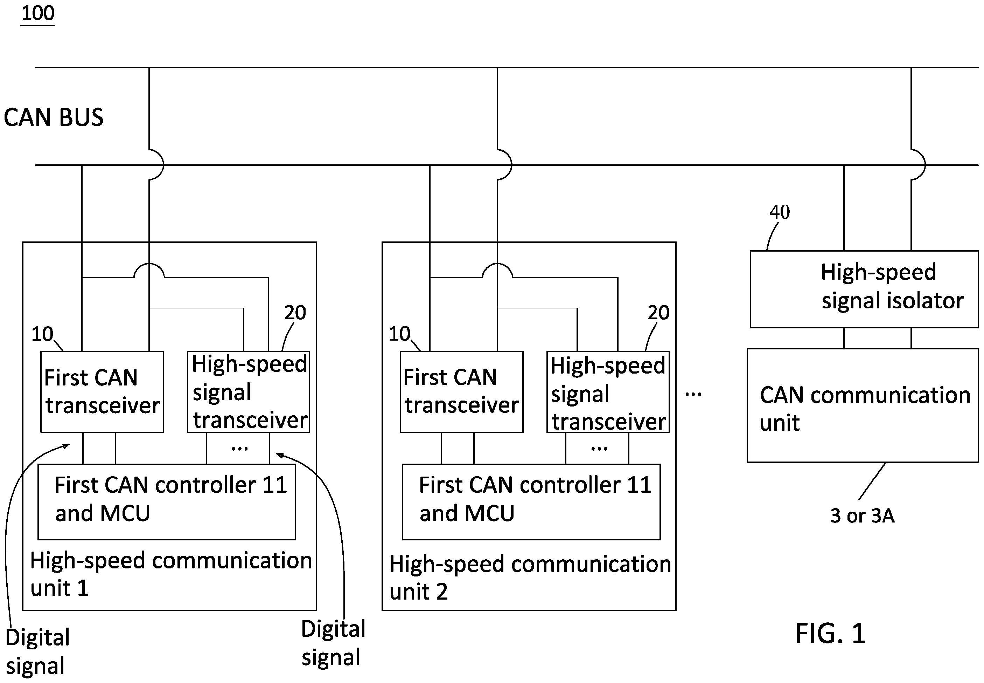

FIG. 1 shows a hybrid wired communication system 100 combining a controller area network and other high speed communication technologies according to this disclosure. The wired communication system 100 utilizes a high-speed communication unit 1, a high-speed communication unit 2 and a general CAN communication unit 3 or 3A on a same communication medium in a hybrid manner.

Please note that the communication medium of the wired communication system 100 consists of two wires. In this embodiment, the wired communication system 100 is disposed on the same CAN BUS. However, this embodiment can also be applied to twisted pairs, power lines, coaxial lines or combinations thereof. The wired communication system 100 includes the high-speed communication unit 1 and the high-speed communication unit 2, that are compatible with the CAN protocol. Each of the high-speed communication unit 1 and the high-speed communication unit 2 includes a specialized first CAN transceiver 10 and a high-speed signal transceiver 20. The high-speed signal transceiver 20 can transmit and receive high-speed signals, and a control signal connection is present between the high-speed signal transceiver 20 and the CAN transceiver 10. Alternatively, the high-speed signal transceiver 20 is connected to the CAN transceiver 10 through a microcontroller unit (MCU). Collaborative operations may be performed between the high-speed signal transceiver 20 and the first CAN transceiver 10. In this embodiment, each of the high-speed communication unit 1 and the high-speed communication unit 2 includes a first CAN controller 11 and MCU, which is coupled to the first CAN transceiver 10 and the high-speed signal transceiver 20 to perform control. The first CAN controller 11 and MCU can modulate digital signals for the first CAN transceiver 10 to output signals complying with the CAN protocol, and can also demodulate the digital signals transmitted from the first CAN transceiver 10.

The specialized first CAN transceiver 10 modulates and transmits, or receives and demodulates at least one CAN protocol signal. The high-speed signal transceiver 20 utilizes neither a CAN protocol nor a CAN FD protocol. The high-speed signal transceiver 20 and the first CAN transceiver 10 are directly connected or coupled to the same CAN BUS. The physical (PHY) layer data rate thereof for transmitting and receiving the high-speed signals is higher than 50 Mbit/sec. The first CAN transceiver 10 and the high-speed signal transceiver 20 operate collaboratively. The first CAN transceiver 10 does not transmit dominant signals when the wired communication system is transmitting high-speed signals, thus preventing interference with the high-speed signals. In other words, the high-speed signal transceiver 20 can transmit signals only after a predetermined time period has elapsed since dominant signaling ceased (only after the first CAN transceiver 10 stops transmitting the dominant signals for the predetermine time period). The high-speed signal transceiver 20 cooperates with the first CAN transceiver 10 to obtain the transmission opportunities through the arbitration mechanism of the CAN protocol. In this disclosure, "coupling" refers to transmitting a signal to or receiving a signal from a wire through components such as resistors, capacitors, inductors, or other elements. In addition, the arbitration mechanism for signal transmission in the wired communication system 100 remains the same as that defined in the CAN protocol.

Furthermore, the general CAN communication unit 3 or 3A in this embodiment makes the ordinary CAN communication unit 3 or 3A be coupled to the same CAN BUS to operate normally through a high-speed signal isolator 40. The high-speed signal isolator 40 isolates the high-speed signals on the CAN BUS, preventing the error counter (not shown) in the CAN communication unit 3 or 3A from value incrementing when receiving high-speed signals. One end of the high-speed signal isolator 40 is coupled to the CAN BUS, and the other end is coupled to a second CAN transceiver 30 and a second CAN controller 50 or the MCU.

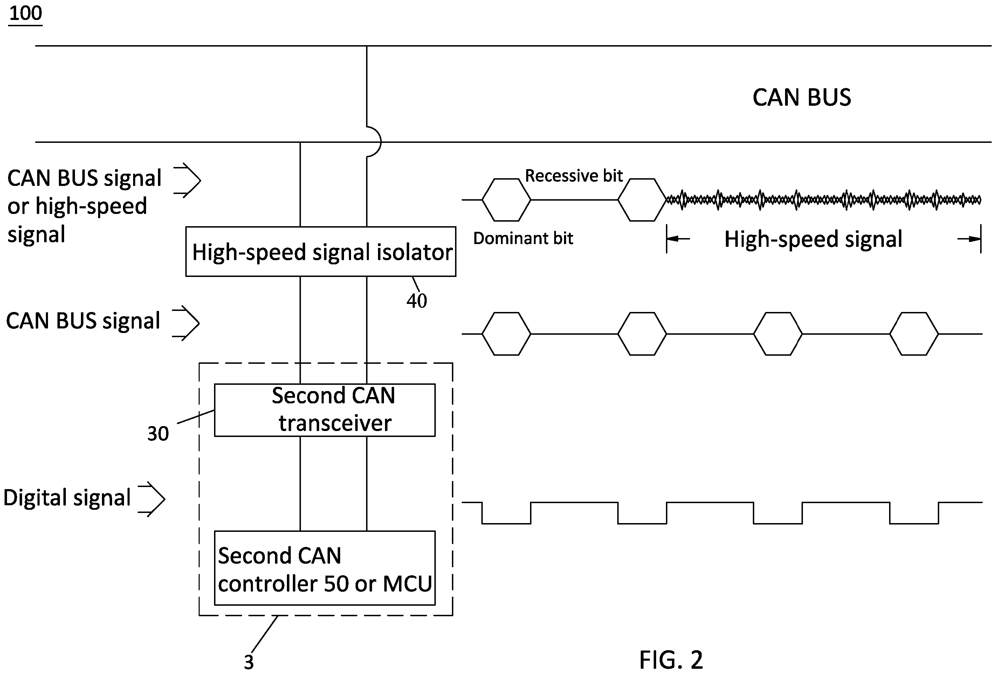

FIG. 2 is a schematic diagram showing the high-speed signal isolator 40 added to the ordinary CAN communication unit 3. Referring to FIG. 2, please note that the CAN communication unit 3 in this embodiment includes the ordinary second CAN transceiver 30, and the second CAN controller 50 or MCU. The high-speed signal isolator 40 isolates the high-speed signals coming from the CAN BUS, so that the second CAN transceiver 30 receives the CAN signal and transmits digital signals to the second CAN controller 50 or MCU. This maintains the synchronization of the second CAN controller 50 or MCU without increasing the error count of the CAN communication unit 3.

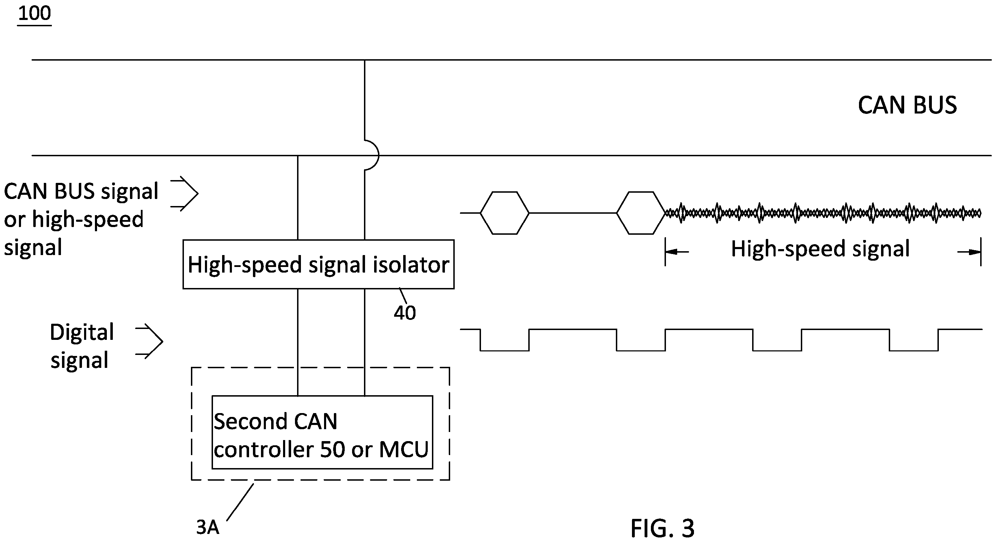

FIG. 3 is a schematic diagram showing the high-speed signal isolator 40 added to the ordinary CAN communication unit 3A. Referring to FIG. 3, please note that the CAN communication unit 3A in this embodiment includes the second CAN controller 50 or MCU. The difference between this embodiment and the previous one is that the second CAN transceiver 30 can be separated from the CAN communication unit 3A and combined with the high-speed signal isolator 40, so that the high-speed signal isolator 40 may have the function of the second CAN transceiver 30. In this embodiment, the high-speed signal isolator 40 isolates the high-speed signals from the CAN BUS, and the high-speed signal isolator 40 receives the CAN signals and directly outputs the digital signal to the second CAN controller 50 or MCU. This maintains the synchronization of the second CAN controller 50 or MCU without increasing the error count of the CAN communication unit 3A. The high-speed signal isolator can also be regarded as a specialized first CAN transceiver.

As shown in FIGS. 2 and 3, when a high-speed communication unit on the same CAN BUS transmits the high-speed signals, the high-speed signal isolator 40 functions like a specialized first CAN transceiver 10, and can know or obtain the start and end times of transmissions of the high-speed signals to perform signal isolation, preventing the connected second CAN transceiver 30, second CAN controller 50, or MCU from generating an error response. As shown in FIG. 2 or 3, one end of the high-speed signal isolator 40 is directly connected or coupled to the same CAN BUS, while the other end is connected or coupled to the second CAN transceiver 30, the second CAN controller 50, or MCU.

Furthermore, predetermined measures are implemented for the second CAN transceiver 30 to prevent misinterpreting signals from the high-speed signal transceiver 20 as error signals.

As previously mentioned, one method to enable the second CAN transceiver 30 connected onto the same CAN BUS to operate normally during the high-speed signal transceiver 20 transmits the signal is to dispose the high-speed signal isolator 40 between the second CAN transceiver 30 and the CAN BUS, or between the second CAN controller 50 or MCU and the CAN BUS. The high-speed signal isolator 40 isolates the signals transmitted by the high-speed signal transceiver, and transmits a specific signal to the connected ordinary second CAN transceiver 30. Specifically, during high-speed signal transmission, the high-speed signal isolator 40 continuously transmits another signal complying with the CAN protocol to the connected second CAN transceiver 30. This maintains the synchronization of the second CAN transceiver 30 and prevents its transmitting error counter (TX error counter) and receiving error counter (RX error counter) (not shown) from error cumulative value incrementing. The specialized first CAN transceiver 10 does not block the normal CAN signal on the CAN BUS, so that the second CAN transceiver 30 can make a normal response to the CAN signal on the CAN BUS.

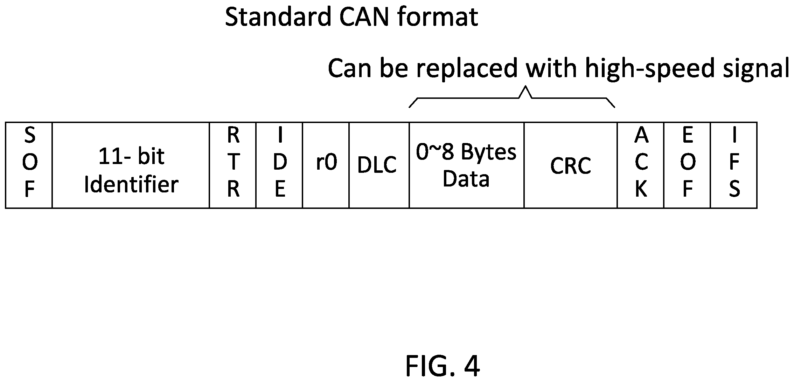

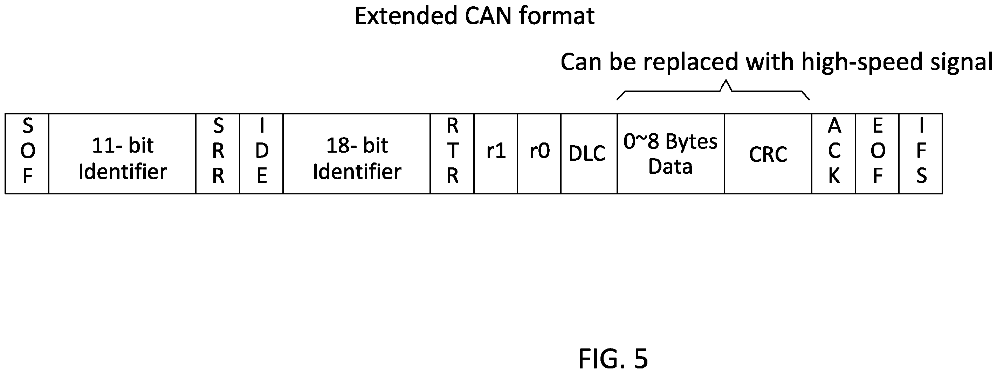

The communication system 100 adopts a default mechanism, such as a special encoding arrangement within the normal CAN signal, so that the specialized first CAN transceiver 10 can predict when the high-speed signal transceiver 20 outputs the signal. This allows the specialized first CAN transceiver 10 to notify the high-speed signal transceiver 20 to receive or transmit the signal. The default mechanism can make all other communication units, connected to the same CAN BUS, know start and end times of transmissions of the high-speed signals, allowing them to properly receive and demodulate these signals. After the high-speed communication, all the communication units return to the original CAN mode for the arbitration of the next signal transmission. Referring to FIGS. 4 and 5, the CAN BUS transmission message carries an identifier (ID) that represents the message priority. Meanwhile, the receiver can perform message filtering according to this ID. The standard CAN format has an 11-bit ID, and the extended CAN format has a 29-bit ID, which has additional 18 bits compared with the ID of the standard CAN format. In this embodiment, the default mechanism of the wired communication system 100 adopts the special encoding arrangement. One of the special encoding arrangements is to reserve some specialized IDs (hereinafter referred to as "specialized IDs") functioning for communication with the high-speed communication unit 1 or the high-speed communication unit 2. Each high-speed communication unit uses a general ID when performing the ordinary CAN communication and a specialized ID when performing high-speed communication. The wired communication system 100 must pre-set with these specialized IDs, and all specialized first CAN transceivers 10 and high-speed signal isolators 40 can identify these specialized IDs to realize that the high-speed communication unit will output high-speed signals in the future, and to make the correct response. In other words, the wired communication system 100 must be preconfigured with these specialized IDs, which are recognized by all specialized first CAN transceivers 10 and high-speed signal isolators 40. This recognition allows them to anticipate the transmission of high-speed signals and respond accordingly. Consequently, this ensures that all the high-speed signal transceivers 20 can receive, demodulate and transmit the high-speed signals to the CAN BUS, and that the general second CAN transceiver 30 will not receive these high-speed signals to cause errors. Because the identification is made according to the IDs, this system still can be compatible with the signal formats of the existing CAN and CAN FD protocols. The ordinary CAN communication systems that are currently used still can be used without needing the upgrade.

In one embodiment, the fields of the standard CAN format in FIG. 4 include, in order, a start of frame (SOF), a 11-bit identifier (ID), a single remote transmission request (RTR), an identifier extension (IDE), a reserved bit (R0), a data length code (DLC), 0^{~}8 bytes data Data, a cyclic redundancy check (CRC), an acknowledgement code (ACK), an end of frame (EOF) and an inter-frame space (IFS). The 0^{~}8 bytes Data field can be used to transmit up to 64 bits of data. The DLC has a 4-bit length and the IFS has a 7-bit length. In this embodiment, the IDE indicates that a standard CAN identifier without extensions is being transmitted. To maintain compatibility with the standard CAN format, the time period of outputting the high-speed signals is restricted within the usable range of the data field (DATA field) and the CRC field. The wired communication system 100 needs to pre-set different DLC values, so that the high-speed signals corresponding thereto will be outputted for the predetermined periods of times, wherein the high-speed signal transmission is performed mainly using the periods of the data field and the CRC field. After transmitting the high-speed signal, the wired communication system reserves, in advance, the time for the high-speed signal receiver to perform demodulation and CRC inspection. Subsequently, the specialized first CAN transceiver 10 of the high-speed communication unit, which receives the high-speed signal, responds with ACK, EOF, and IFS according to the standard CAN format. The system then returns to the ordinary CAN mode. The high-speed signals contain the data and CRC check codes. If a CRC failure is detected, the system responds using the error flag defined in the CAN format.

Referring to FIG. 5, fields of the extended CAN format of FIG. 5 include, in order, a SOF, an 11-bit ID, a substitute remote request (SRR), an IDE, an 18-bit ID, a RTR, reserved bits R0 and R1, a data length code (DLC), 0^{~}8 bytes Data, a cyclic redundancy check (CRC), an acknowledgement code (ACK), an end of frame (EOF) and an inter-frame space (IFS). In this embodiment, the IDE indicates that the identifier includes additional bits following the recessive bits, with an 18-bit extension code located after the IDE. To maintain compatibility with the extended CAN format, the time of outputting the high-speed signals is still restricted within the usable range of the data field and the CRC field. The wired communication system 100 needs to pre-set different DLC values, so that the high-speed signals corresponding thereto will be outputted for the predetermined periods of times, wherein the high-speed signal transmission is performed mainly using the period for transmitting the data field and the CRC field. After transmitting the high-speed signal for the receivers, the wired communication system reserves, in advance, the time for the high-speed signal receiver of the high-speed communication unit to perform demodulation and CRC inspection. Subsequently, the specialized first CAN transceiver 10 can respond to ACK/EOF/IFS and return to the ordinary CAN mode. The high-speed signals contain the data and CRC check codes. If a CRC failure is detected, the system responds using the error flag defined in the CAN format.

Please note that the high-speed signal transceiver 20 can transmit and receive an OFDM signal, a QAM signal or a certain SerDes signal. It transmits only when its associated high-speed communication unit obtains the opportunity to transmit, and only after the specialized first CAN transceiver 10 has ceased signal transmission.

As mentioned hereinabove, in FIGS. 4 and 5, the SOF is the start of a new transmission. The arbitration field, which includes multiple subsystems (nodes), determines message priority when multiple nodes attempt to transmit simultaneously. In other words, the arbitration field for determining the node with the lower arbitration ID as having the priority when the nodes try to transmit at the same time, wherein the other nodes temporarily pause transmission (the node with the lowest arbitration ID is granted for transmission, while other nodes pause their transmissions). A control field controls and manages the data transmission. The high-speed communication unit can normally transmit and receive the ordinary CAN format signals. However, when the special encoding method is identified to transmit the high-speed signals, the data field and the CRC field can be used to transmit and receive the high-speed signals. The transmission contents of the high-speed signals have included the verification codes, eliminating the need for signals transmission using the low-speed CAN format. After the high-speed signal transmission, a period of time needs to be reserved for the high-speed signal transceiver 20 to demodulate the signal before other nodes can transmit acknowledgments. An acknowledgement field indicates acknowledgement information. If the high-speed communication unit cannot properly demodulate the high-speed signals due to interference or any other reasons, then the transmitter of the high-speed signal can perform re-transmission according to the replied acknowledgement, or the error flag transmitted from the receiver. The receiver can also notify the original transmitter to re-transmit the missing packet or directly discard the packet depending on circumstance when a transmission opportunity is obtained next time. The transmitter may be requested to re-transmit the missing packet using either CAN mode or high-speed mode according to the requirements.

In addition to the data field and the CRC field, all other fields can utilize the transmission using the original CAN BUS message, preserving the advantage of CAN. This approach, combined with the implementation of the high-speed signal isolator, ensures compatibility with existing CAN BUS devices.

If the high-speed communication data is transmitted solely within the data field and CRC field of the standard CAN/CAN FD and extended CAN/CAN FD formats, the maximum time ratio can be used by the high-speed transmission is approximately 70%. To increase this ratio of the high-speed transmission, an alternative encoding method can be used to declare a longer period of continuous transmission time (e.g., 1 millisecond (ms)). This involves extending the combined duration of the data field and CRC field. The specialized first CAN transceiver 10 and its first CAN controller 11 can be configured to allow this kind of transmission. Because the high-speed communication unit usually has a crystal oscillator circuit or a built-in digital controlled crystal oscillator (DCXO), they can maintain the accurate clock synchronization over the extended periods, making this special format permissible. However, during the extended transmission, the high-speed signal isolator 40 still needs to maintain the synchronization of the ordinary second CAN transceiver 30 connected thereto and prevent its error count from incrementing. To achieve this, the high-speed signal isolator 40 needs to continuously transmits a fake EOF to the connected general second CAN transceiver 30 within a reasonable time. Furthermore, the high-speed signal isolator 40 continuously transmits the SOF and outputs the high-priority ID to the connected general second CAN transceiver 30, so that it is possible to block the connected ordinary second CAN transceiver 30 from getting the transmission opportunities.

Please note that the high-speed communication unit or the high-speed signal isolator can utilize a specialized ID to identify the mode for transmitting high-speed signals over a specialized long period of time. When the specialized ID is being used, the control field can be re-used to identify whether that the next continuous high-speed signal will to be outputted for a long period of time, and how long the continuous high-speed signal will be transmitted. This information can allow the high-speed signal isolator 40 to restrict the ordinary second CAN transceiver 30 according thereto. Please note that in the standard CAN format, the control fields are the fields IDE, r0, and DLC; and in the extended CAN format, the control fields are the fields r1, r0, and DLC.

Please note that if the wired communication system 100 continuously transmits the high-speed signals for the time exceeding the sum of the time of the data field and the time of the CRC field, then the high-speed signal isolator 40 continuously outputs another signal complying with the CAN protocol to the connected second CAN transceiver 30 or the second CAN controller 50. This ensures that the second CAN transceiver 30 or the second CAN controller 50 can remain synchronized with the wired communication system 100 without increasing the error count. Consequently, all communication units can participate in the next arbitration when the start of frame (SOF) of the wired communication system 100 appears next time.

In another embodiment, DLC within the control field is re-used. The original DLC is used to represent the data length (4-bit encoding) for message transmission. By modifying the encoding definition, the encoding can be used to represent the period of the long-time high-speed signal mode. Consequently, the data rate can be dramatically improved (e.g., reducing the time ratio occupied by low-speed CAN transmission to be less than 5%). After the transmission is completed, the mode returns to the original CAN mode to process the CAN signal transmission. This embodiment still retains the advantage of the CAN protocol. When the high-speed signals transmit the OFDM signal with the 100 MHz bandwidth and if the bit-loading for each sub carrier is 10 bits, then it represents that this wired communication system 100 can reach the physical layer (PHY) rate close to 1 Gbps (i.e., equivalent to the rate of 1000Base-T Ethernet). This high data rate is achieved while remaining the advantages of the network architecture in the CAN protocol, and may be compatible with the old CAN system. Compatibility with existing CAN systems is crucial for automotive component manufacturers, as it enables a seamless upgrade path without requiring significant modifications to existing hardware or software. When the wired communication system 100 is in a general high-speed transmission mode, the format of the control field in the data frame is kept to be the same as CAN protocol; Similarly, the format of the control field for the long-time high-speed transmission mode is also kept to be the same as CAN protocol, wherein the wired communication system 100 re-defines the time required by the high-speed signals in the control field to implement a transmission time extension.

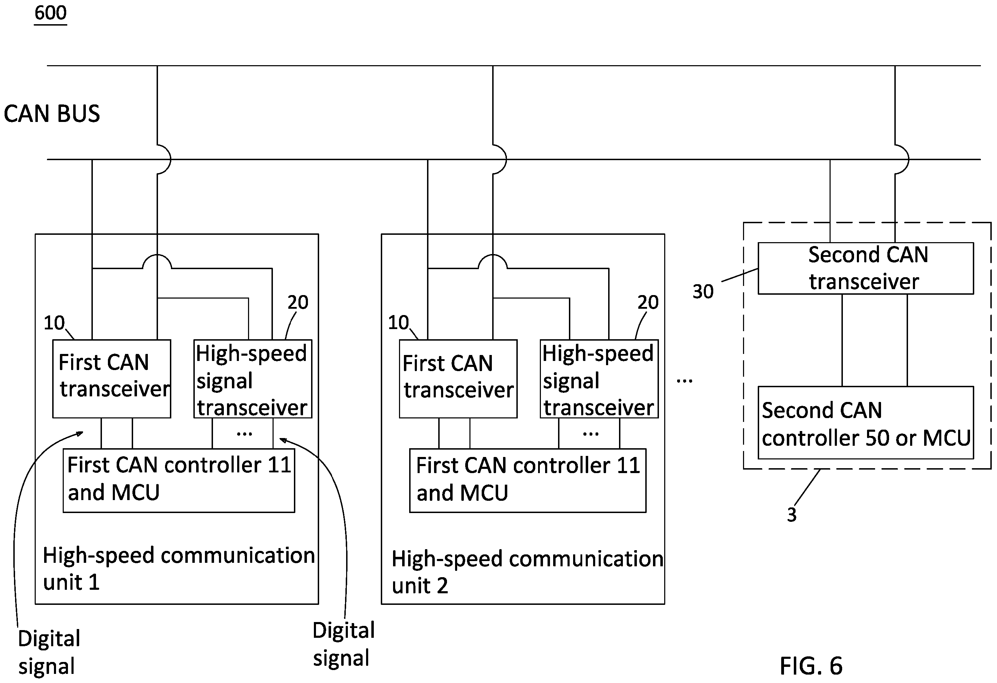

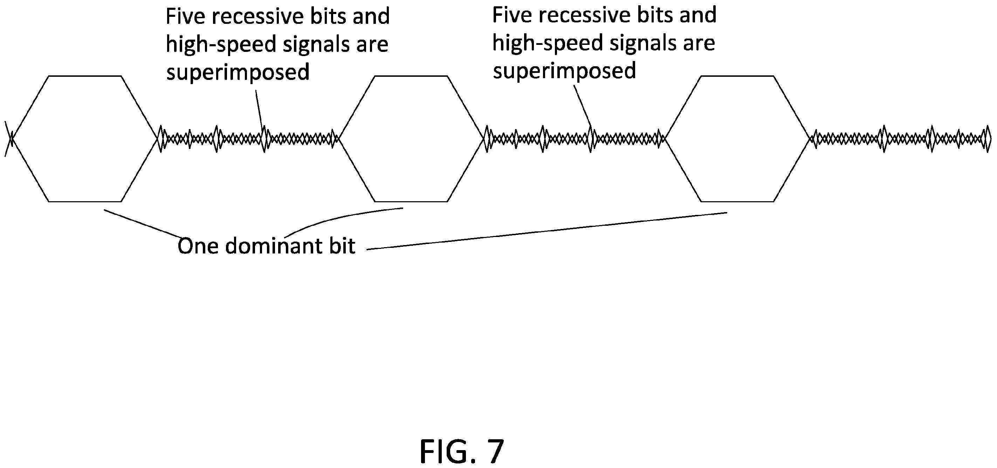

Referring to FIG. 6, it is assumed that the wired communication system requires the high-speed communication functionality while remaining compatible with the general CAN communication unit 3 without modifying the CAN communication unit 3 of the original circuit structure (i.e., without the high-speed signal isolator). In one embodiment, the high-speed communication signal is outputted during the recessive bit. The amplitude of the high-speed signal is smaller than the amplitude of the dominant bit signal outputted from the general CAN communication unit 3 to prevent the CAN communication unit 3 from detecting the high-speed signal as the dominant bit. That is, the CAN communication unit 3 is not going to generate the synchronization loss or the increase of the built-in error counter value due to the operation of the high-speed communication unit 1 or the high-speed communication unit 2. The high-speed communication unit 1 or the high-speed communication unit 2 is still able to cooperate with the associated first CAN transceiver 10 to transmit the high-speed signal within the period when the first CAN transceiver 10 transmits the recessive bit. In addition, the amplitude of the high-speed signal is smaller than that of the signal of the dominant bit outputted from the CAN communication unit 3, so that the CAN communication unit 3 will not regard it as the dominant bit. A feasible method is described as follows. When the high-speed communication unit 1 or 2 has acquired the CAN BUS priority in the arbitration field according to ID, the specialized first CAN transceiver 10 transmits one dominant bit every time after five recessive bits have been transmitted in the data field, so that bit stuffing error will not be detected by the ordinary CAN communication unit 3. As schematically shown in FIG. 7, five recessive bits and high-speed signals overlap. The high-speed signals are transmitted simultaneously when the specialized first CAN transceiver 10 transmits recessive bits. Furthermore, the high-speed communication unit 1 or 2 has the function of adjusting the signal strength of the high-speed signals, preventing the ordinary CAN communication unit 3 from mis-detecting the CAN BUS state due to the high-speed signals.

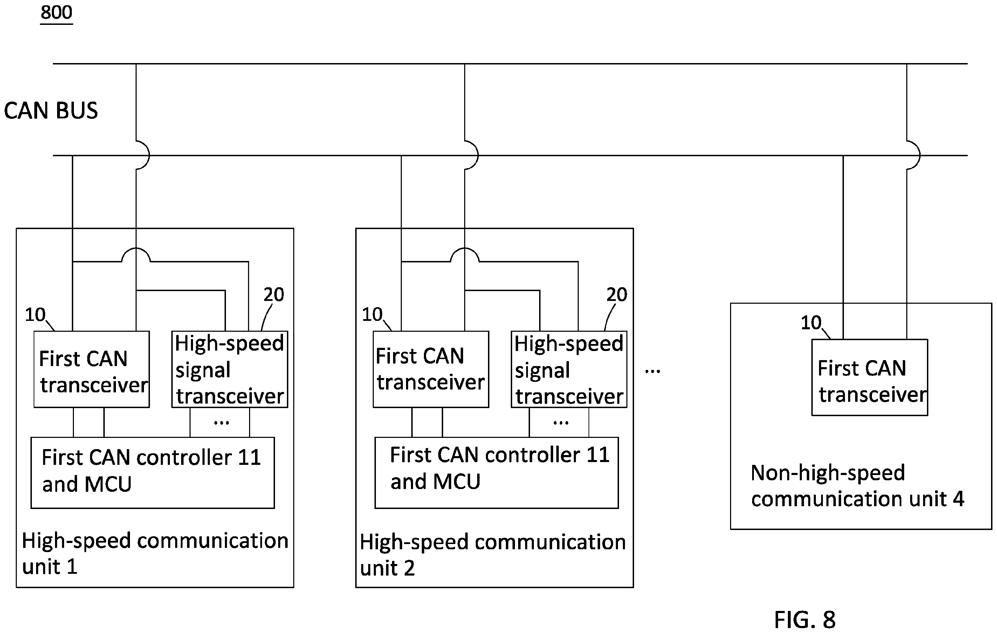

FIG. 8 shows another embodiment of this disclosure. As depicted in FIG. 8, a wired communication system 800 includes a non-high-speed communication unit 4, which possesses a first CAN transceiver 10 and is connected or coupled to the same CAN BUS through the first CAN transceiver 10, and has no high-speed signal transceiver. In other words, the non-high-speed communication unit 4 can utilize the first CAN transceiver 10 on the CAN BUS directly, without transmitting the high-speed signals.

In summary, this disclosure provides a wired communication system integrating CAN and other high-speed communication systems to transmit and receive messages of CAN (or CAN FD) and other high speed communication technologies. Thus, the advantage of CAN BUS can be kept and the transmission data rate can also be increased.

## Claims

1. A wired communication system having a communication medium consisting of two wires, and comprising at least two high-speed communication units compatible with a CAN protocol, wherein each of the high-speed communication units comprises:
a first CAN transceiver for modulating and transmitting, or receiving and demodulating CAN protocol signals;
wherein the first CAN transceiver does not transmit dominant signals in order not to interfere with high-speed signals when the wired communication system is transmitting the high-speed signals; the first CAN transceiver can transmit signals only after a predetermined time period has elapsed since dominant signaling ceased; the wired communication system has a default mechanism that allows all the high-speed communication units connected to the same communication medium to know start and end times of transmissions of the high-speed signals for reception and demodulation; and all of the high-speed communication units return to an original CAN mode for the start of frame and arbitration of the next transmission.

2. The wired communication system according to claim 1, wherein the high-speed communication units comprise:
a high-speed signal transceiver using neither CAN protocol nor a CAN FD protocol, wherein the high-speed signal transceiver and the first CAN transceiver are directly connected or coupled to the same communication medium, and a physical layer (PHY) data rate of the high-speed signal transceiver is higher than 50 Mbit/sec; and
a first CAN controller and a MCU coupled to the first CAN transceiver and the high-speed signal transceiver to perform control, wherein the first CAN controller and the MCU are capable of modulating digital signals for the first CAN transceiver to output signals complying with the CAN protocol, and are also capable of demodulating digital signals transmitted from the first CAN transceiver;
wherein collaborative operations are performed between the first CAN transceiver and the high-speed signal transceiver, and the first CAN transceiver does not transmit the dominant signals in order not to interfere with the high-speed signals when the high-speed signal transceiver is transmitting the high-speed signals.

3. The wired communication system according to claim 2, wherein a signal transmitting arbitration mechanism of the wired communication system is kept to be the same as the CAN protocol.

4. The wired communication system according to claim 2, wherein the wired communication system comprises a CAN communication unit, which does not pertain to the high-speed communication units.

5. The wired communication system according to claim 2, wherein the high-speed communication unit can transceive at least one of CAN or CAN FD signal and at least one of the high-speed signals to increase a communication speed.

6. The wired communication system according to claim 5, wherein when the wired communication system is in a general high-speed transmission mode, the format of the control field in the data frame is kept to be the same as CAN protocol; and the format of the control field for a long-time high-speed transmission mode is also kept to be the same as CAN protocol, wherein the wired communication system re-defines a time required by the high-speed signals in the control field to implement a transmission time extension.

7. The wired communication system according to claim 5, wherein the transmissions of the high-speed signals mainly utilize the time for transmitting a data field and a CRC field; the wired communication system reserves a sufficient period of time after the transmissions of the high-speed signals for the receivers to perform demodulation, and then the first CAN transceiver replies acknowledgement (ACK); if the high-speed communication unit cannot properly demodulate the high-speed signals due to interference or any other reasons, then a transmitter of the high-speed signals can perform re-transmission according to the replied acknowledgement, or an error flag transmitted from a receiver; the receiver can also notify the original transmitter to re-transmit the missing packet or directly discard the packet depending on circumstances when a transmission opportunity is obtained next time; and the transmitter can also be requested to re-transmit the missing packet using either CAN mode or high-speed mode according to requirements.

8. The wired communication system according to claim 4, wherein the CAN communication unit comprise:
a high-speed signal isolator for isolating the high-speed signals on the communication medium;
a second CAN transceiver, which is coupled to another end of the high-speed signal isolator, and is coupled to the communication medium through the high-speed signal isolator to operate normally, wherein a value of an error counter of the second CAN transceiver cannot be increased due to the transmissions of the high-speed signals on the communication medium; wherein when the high-speed signals are being transmitted, the high-speed signal isolator continuously transmits another signal complying with the CAN protocol to the second CAN transceiver coupled thereto to keep synchronization; and
a second CAN controller coupled to the second CAN transceiver to control the second CAN transceiver;
wherein the high-speed signal isolator can obtain the start and end times of the transmissions of the high-speed signals transmitted on the communication medium to perform signal isolation without making the second CAN transceiver or the second CAN connected thereto generate an error response.

9. The wired communication system according to claim 5, wherein the wired communication system comprises a non-high-speed communication unit having the first CAN transceiver, and is connected or coupled to the same communication medium through the first CAN transceiver, and the non-high-speed communication unit does not have the high-speed signal transceiver.

10. The wired communication system according to claim 6, wherein when the wired communication system continuously transmits the high-speed signals for a time exceeding a sum of a time of a data field and a time of a CRC field, a high-speed signal isolator continuously outputs another signal, complying with the CAN protocol, to a second CAN transceiver or a second CAN controller connected thereto, so that the second CAN transceiver or the second CAN controller can keep in synchronization with the wired communication system without adding an error count, and all of the high-speed communication units can participate in a next arbitration when the start of frame (SOF) of the wired communication system appears next time.

11. The wired communication system according to claim 3, wherein at least one CAN communication unit is connected to the communication medium, wherein the CAN communication unit is not going to generate synchronization loss or an increase of a built-in error counter value due to an operation of the high-speed communication unit; and the high-speed communication unit is still able to cooperate with the first CAN transceiver to transmit the high-speed signals within a time when the first CAN transceiver transmits a recessive bit, and an amplitude of the high-speed signals is smaller than an amplitude of a signal of a dominant bit outputted from the CAN communication unit, so that the CAN communication unit will not regard the high-speed signals as the dominant bit.

12. The wired communication system according to claim 6, wherein the high-speed communication unit transmits a general CAN signal using the first ID, and transmits the high-speed signals using the second ID; the first CAN transceiver can determine whether the current transmission is in general high-speed transmission mode or long-time high-speed transmission mode according to the value of the second ID.
